# EUROPÄISCHE PATENTANMELDUNG

(11) **EP 0 554 467 A2**
(43) Veröffentlichungstag der Anmeldung: **11.08.1993**
(21) Anmeldenummer: 92100979.1
(22) Anmeldetag: 22.01.1992
(51) Int. Cl.: B09B 3/00, C02F 11/00

(54) **Verfahren zur Behandlung von wasserhaltigen mit organischen Schadstoffen belasteten Materialien unter Verwendung von leicht flüchtigen und mit Wasser nicht mischbaren organischen Lösungsmitteln**

(30) Priorität: 28.02.1991 DE 4106281
(71) Anmelder: RUHRKOHLE ÖL UND GAS GMBH, D-46236 Bottrop (DE)
(72) Erfinder: Dybus, Herbert, Dipl.-Ing., W-4300 Essen 14 (DE); Funk, Otto, Dr. Dipl.-Chem., W-4270 Dorsten 1 (DE)

(57) **Zusammenfassung**

Verfahren zur Behandlung von wasserhaltigen, mit organischen Schadstoffen kontaminierten Materialien unter Verwendung leicht flüchtiger, mit Wasser nicht mischbarer organischer Lösungsmittel mit den folgenden Schritten:
(a) Zugabe des organischen Lösungsmittels zu dem zu behandelnden Material und gründliches Mischen,
(c) Abtrennen der flüssigen organischen Phase mit den Schadstoffen,
(d) Abtreiben des verbliebenen Lösungsmittels aus dem Rückstand von Schritt (c) und
(e) Rückgewinnen des im Schritt (3) und (d) erhaltenen Lösungsmittels.

## Beschreibung

Die Erfindung betrifft ein Verfahren zur Behandlung von wasserhaltigen, mit organischen Schadstoffen belasteten Materialien unter Verwendung von leicht flüchtigen und mit Wasser nicht mischbaren organischen Lösungsmitteln. Insbesondere dient das Verfahren zur Behandlung von PCB- und/oder PCDM-haltigen Ölabscheiderschlämmen. Es kann aber auch auf Erdreich, Sand, Bauschutt und andere feste Materialien angewandt werden, die mit organischen Schadstoffen, beispielsweise Öl, kontaminiert sind.

Bekannt ist ein Verfahren zur Extraktion von Verunreinigungen und Giftstoffen aus Böden in einem vor Ort durchgeführten Extraktionsprozeß, bei dem das zu behandelnde Material mit nicht brennbaren organischen Lösungsmitteln extrahiert wird und das Lösungsmittel im Anschluß an die Behandlung durch Destillation zurückgewonnen wird. Nachteilig bei diesem Verfahren ist der Einsatz von chlorierten Kohlenwasserstoffen als Extraktionslösungsmittel, zum einen wegen der bekannten Toxizität dieser Materialien und zum anderen, weil eine rückstandsfreie Entfernung der chlorierten Kohlenwasserstoffe aus dem behandelten Material nicht gewährleistet ist.

Ölhaltige Schlämme, insbesondere aus Ölabscheidern des Bergbaus, der Industrie und der gewerblichen Wirtschaft, wurden bisher hauptsächlich durch Vermischen mit Zuschlagstoffen, wie Zement, Kalkhydrat oder Gips verfestigt und anschließend deponiert oder im Straßenbau wiederverwertet. Wegen des hohen Schadstoffgehalts ist aber eine derartige Entsorgung nicht mehr möglich. Bei der zulässigen thermischen Entsorgung bestehen aber Engpässe.

Wegen des immer knapper werdenden Deponierraumes und um Umweltgefährdungen auszuschließen, stehen heute Verfahren zur Abtrennung ölhaltiger Bestandteile im Vordergrund des Interesses. Ziele der Verfahren sind eine Mengen- und Schadstoffreduzierung und nach Möglichkeit eine Wiederverwertung des gereinigten Materials. Auch in den Fällen, wo eine Wiederverwertung nicht möglich ist, wird durch Mengenreduzierung, z.B. durch Schlammentwässerung und Ölentfernung, wertvoller Deponierraum eingespart.

Im Bereich des Steinkohlenbergbaus fallen bei der Wartung und Reparatur von Bergbaumaschinen gebrauchte Hydraulikflüssigkeiten, Altöle und Ölabscheiderinhalte an. In chemisch-physikalischen Behandlungsanlagen erfolgt die Auftrennung der PCB/PCDM-belasteten Abfallstoffe in eine Schlamm-, Öl- und Wasserphase, die separat weiterbehandelt werden, in einem sogenannten Dreiphasendekanter. Endprodukte sind Öl für die Hochtemperaturverbrennung (PCB/PCDM belastet), gereinigtes Abwasser und durch Zugabe von Zuschlagstoffen verfestigter Schlamm (PCB /PCDM-haltig) für die Untertagedeponie.

Polychlorierte Biphenyle (PCB) und Diphenylmethane (PCDM) sind synthetische Öle, die aufgrund ihrer Eigenschaften (schwer entflammbar) im Bergbau besonders geeignet sind. PCB-haltige Hydraulikflüssigkeiten wurden nach Inkrafttreten der 2. PCB-Richtlinie ab Juli 1986 durch PCDM (sog. HFD) und andere wässrige PCB/PCDM-freie Hydraulikflüssigkeiten (HFA, HFC) ersetzt. Trotz bereits mehrfach durchgeführtem Wechsel und Austausch der PCB-haltigen Hydraulikflüssigkeiten bei Reparatur und Wartung sind immer noch Restgehalte von > 100 ppm im Öl zu finden. PCB-haltige Öle fallen ferner bei der Wartung und Reinigung von hydraulischen Vorrichtungen und Maschinen, sowie bei der Motorölentsorgung in größeren Mengen an und finden sich deshalb häufig in den Ölabscheidern von Tankstellen und Werkstätten.

Die Anforderungen an die zu deponierenden Reststoffe bezüglich der Restölgehalte sollen zukünftig verschärft werden, entsprechende Regelungen gemäß TA-Abfall sind in Vorbereitung. Zur Sicherung des Entsorgungskonzeptes, für die von wesentlicher Bedeutung eine langfristige Genehmigung zur Deponie der Reststoffe ist, wurde deswegen nach Behandlungsverfahren zur möglichst weitgehenden Entfernung der ölhaltigen Bestandteile gesucht. Hierbei stellte sich heraus, daß mit den üblicherweise verwendeten Waschverfahren mit hauptsächlich Wasser unter Zusatz von oberflächenaktiven Substanzen (Tenside) oder mit Wasserdampf keine ausreichende Ölabtrennung vom Feststoff erreicht werden kann, was zum einen auf die Qualität des Öls (hochsiedend, schwerflüchtig) und zum anderen auf die hohen Bindungskräfte zwischen Öl und Feststoff zurückgeführt werden kann, die durch die Wasserbehandlung nicht aufgehoben werden können.

Aufgabe der Erfindung ist demgemäß die Bereitstellung eines Verfahrens der eingangs beschriebenen Art, mit dem die weitestgehende Entfernung der organischen Schadstoffe aus dem zu behandelnden Material gewährleistet ist, ein ohne weiteres deponierbarer, wiederverwendbarer oder aufbereitbarer fester Rückstand erhalten wird und der abgetrennte organische Schadstoff in weitgehend isolierter und konzentrierter Form zur weiteren Entsorgung anfällt.

Diese Aufgabe wird mit einem Verfahren der eingangs genannten Art gelöst, das die folgenden Schritte umfaßt:
(a) Zugabe des organischen Lösungsmittels zu dem zu behandelnden Material und gründliches Mischen,
(c) Abtrennen der flüssigen organischen Phase mit den Schadstoffen,
(d) Abtreiben des verbliebenen Lösungsmittels aus dem Rückstand von Schritt (c) und
(e) Rückgewinnen des im Schritt (c) und (d) erhaltenen Lösungsmittels.

Anders als bei der Wasser-/Dampfbehandlung zeigte sich, daß durch Extraktion mit den nicht mit Wasser mischbaren organischen Lösungsmitteln Öl aus Ölabscheiderschlämmen weitgehend bis vollständig von den Feststoffen abgetrennt werden kann. Wenn aufgrund der Feinkörnigkeit des Schlammes (Teilchengröße < 200 µm) keine ausreichende Filtrierbarkeit erzielt werden kann, erfolgt die Feststoff/Flüssigabtrennung nach Absetzen der Feststoffe durch Dekantieren. Der den Hauptanteil des Wassers enthaltene Filterrückstand kann durch Trocknung oder Zugabe von Zuschlagstoffen verfestigt werden. Die dekantierte Flüssigkeit enthält nicht abgesunkene Schwebstoffe und kann aufgrund der Siedeunterschiede destillativ in Lösungsmittel und ölhaltigen Rückstand mit geringem Feststoffanteil aufgearbeitet werden. Falls erforderlich, kann die Extraktion des Feststoffs wiederholt werden.

Vorzugsweise wird aber das im Material vorhandene Wasser azeotrop mit dem Lösungsmittel abdestilliert. Der wasserfreie Rückstand mit dem Überschuß an Lösungsmittel ist dann in der Regel gut filtrierbar. Am Ende der Behandlung wird ein völlig wasser- und ölfreier, fester Rückstand erhalten, der ohne weitere Behandlung (Verfestigung durch Trocknung und/oder Zugabe von Zuschlagstoffen) deponierfähig ist. Die extrahierten Schadstoffe fallen nach dem Abdestillieren des Lösungsmittels in konzentrierter Form an; eine thermische Entsorgung oder, im Falle von Öl, die Hydrierung sind ohne weiteres möglich.

Das erfindungsgemäße Verfahren wird durch die beiliegenden Abbildungen näher erläutert. Von diesen zeigt
- Fig. 1: in einem Fließschema eine Variante des erfindungsgemäßen Verfahrens, bei dem das im Feststoff verbliebene Wasser durch Anhydrit gebunden wird und
- Fig. 2: in einem Fließschema eine andere bevorzugte Ausführungsform des erfindungsgemäßen Verfahrens, bei dem das im zu behandelnden Material enthaltene Wasser azeotrop abdestilliert wird.

Bei den im erfindungsgemäßen Verfahren eingesetzten speziellen, organischen Lösungsmitteln, die mit Wasser nicht mischbar sind, handelt es sich um solche mit einem Siedepunkt/Siedebereich, der weit unterhalb von dem des im Schlamm enthalenen Öls oder anderen Schadstoffs liegt. Vorzugsweise werden als Lösungsmittel Kohlenwasserstoffe mit einem Siedepunkt von 60 bis 200° C, insbesondere 80 bis 160° C verwandt. Besonders bevorzugte Lösungsmittel sind Toluol und Xylol, die über erhebliches Wasserschleppvermögen verfügen, sowie eine Kohlenwasserstoffraktion mit einem Siedebereich von 80 bis 160° C ("Syncrude-Fraktion 80-160"). Es können auch andere organische Lösungsmittel verwandt werden, beispielsweise aliphatische Kohlenwasserstoffe mit einem geeigneten Siedepunkt oder Siedebereich verwandt werden, etwa Petrolether.

Bei dem erfindungsgemäßen Verfahren beträgt das Gewichtsverhältnis Feststoff:Lösungsmittel etwa 1:1 bis 1:5, vorzugsweise 1:2 bis 1:3. Letzteres Verhältnis wird insbesondere dann eingesetzt, wenn das Wasser durch azeotrope Destillation abgetrieben wird. Es hat sich erwiesen, daß im Falle der azeotropen Abtrennung des im zu behandelnden Material vorhandenen Wassers in der Regel ein Extraktionsschritt ausreicht; es können aber auch mehrere Extraktionsschritte durchgeführt werden. Wird das Wasser nicht durch azeotrope Destillation entfernt, können mehrere Extraktionsschritte erforderlich sein, um den Schadstoffgehalt genügend abzusenken.

Im Extraktionsschritt muß die Lösungsmittelfraktion vom festen Rückstand abgetrennt werden. Dies kann durch Filtration oder Dekantieren erfolgen. Wird vor der Extraktion das Wasser azeotrop abgetrennt, ist in der Regel eine problemlose Filtration möglich, anderenfalls bietet sich das Absitzenlassen des festen Rückstandes und das Dekantieren an.

Nach beendeter Extraktion wird der feste Rückstand von noch anhaftendem Lösungsmittel befreit, beispielsweise durch Durchblasen von Luft, Erhitzen und/oder Abdampfen im Vakuum. Vorzugsweise erfolgt dies durch leichtes Erhitzen im Vakuum.

Enthält der feste Rückstand nach der Extraktion und dem Abtreiben des Restlösungsmittels noch Wasser, wird er vorzugsweise mit einem wasserbindenden Zuschlagstoff versetzt und verfestigt. Hierfür eignen sich beispielsweise Zement,Gips-, Halbhydrat oder Anhydrit.

Das erfindungsgemäße Verfahren erlaubt es, die in den einzelnen Destillations- und Extraktionsschritten anfallenden Lösungsmittel zurückzugewinnen und erneut einzusetzen. Dazu wird das bei der Extraktion anfallende kontaminierte Lösungsmittel destillativ abgetrennt, was aufgrund der hohen Siedepunktunterschiede zu den organischen Schadstoffen ohne weiteres möglich ist. Das bei der azeotropen Destillation anfallende organische Lösungsmittel ist aufgrund seiner fehlenden Wassermischbarkeit ohne weiteres von der wässrigen Phase abtrennbar.

Der im erfindungsgemäßen Verfahren anfallende feste Rückstand ist nach seiner Verfestigung ohne weiteres deponierbar, kann aber auch gefahrlos einer weiteren Verwendung zugeführt werden, da der Gehalt an organischen Schadstoffen außerordentlich gering ist. Die extrahierten Schadstoffe fallen nach dem Abtreiben des Lösungsmittels in außerordentlich konzentrierter Form an, was ihre weitere Behandlung erleichtert. Sie können ohne weiteres vernichtet werden; im Falle von verunreinigten Ölen ist eine Hydrierung ohne weiteres möglich.

Das erfindungsgemäße Verfahren ist besonders für die Behandlung von ölhaltigen, mit PCB-/PCDM-belasteten Dekanterschlämmen geeignet. Es kann aber auch zur Reinigung von Boden (Sand, Ton, Schluff oder Mischungen), Bauschutt, Schlamm, chemischen Sonderabfällen, Schredderabfall u.dgl. eingesetzt werden. Extrahiert werden können alle in dem organischen Lösungsmittel löslichen Stoffe, insbesondere Öle und Fette, aliphatische und aromatische Kohlenwasserstoffe, TAK, Phenole, PCB, chlorierte Kohlenwasserstoffe, Pestizide, Insektizide u.dgl. Für die Rückgewinnung des Lösungsmittels ist allerdings ein hinreichend hoher Siedepunktunterschied zwischen Extraktionsmedium und zu extrahierendem Schadstoff Voraussetzung.

Zur Steigerung der Wirkung der Extraktion und/oder zur Beschleunigung des Verfahrens kann diese auch bei erhöhter Temperatur durchgeführt werden. Wird die Extraktion mehrfach durchgeführt, kann mit Lösungsmitteln unterschiedlichen Reinheitsgrades gearbeitet werden, wobei verunreinigtes Lösungsmittel in den ersten Extraktionsschritten und reines Lösungsmittel in den späteren eingesetzt wird.

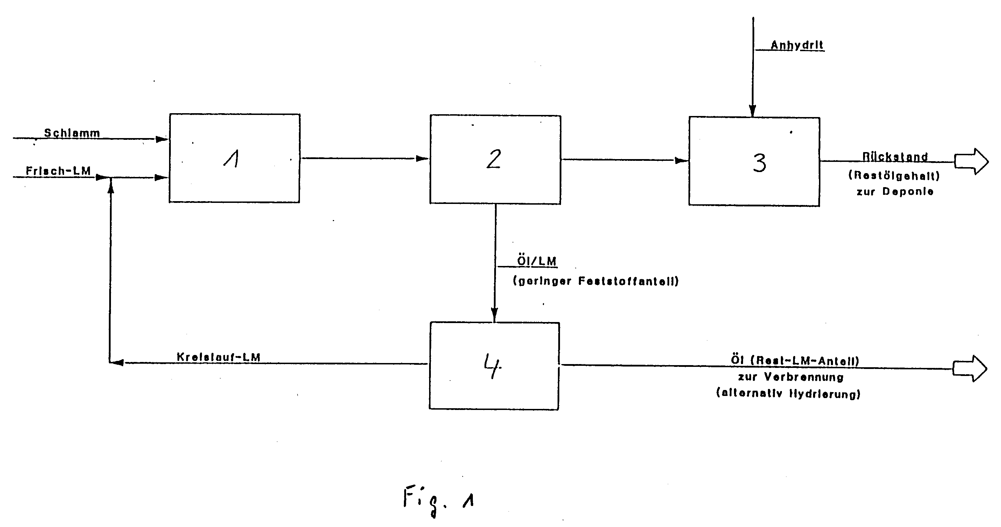

Das Verfahren gemäß der bevorzugten Ausführungsform von Fig. 1 besteht im wesentlichen aus den folgenden Schritten:
(1) Behandlung des Dekanterschlamms in einem Rührwerksbehälter mit speziellen, mit Wasser nicht mischbaren, organischen Lösungsmitteln im Überschuß (Verhältnis Feststoff : Lösungsmittel etwa 1 : 2 bis 1 : 3) unter ständigem Rühren bei Raumtemperatur oder bei erhöhter Temperatur, jedoch unterhalb des Siedebeginns des Lösungsmittels;
(2) nach Absinken der Feststoffe Dekantieren der organischen Flüssigphasen;
(3) in der Rückstandsbehandlung Entfernung der Lösungsmittelreste und teilweise bis vollständig des anhaftenden Wassers, bei teilweiser Entfernung des Wassers Binden des Restwassers durch Zugabe von Zuschlagstoffen, wie Anhydrit; sowie
(4) Destillation. Die abgegossene Flüssigkeit mit geringem Feststoffgehalt enthält das Lösungsmitte-/Ölgemisch, aus dem das Lösungsmittel weitgehend verlustfrei wiedergewonnen werden kann.

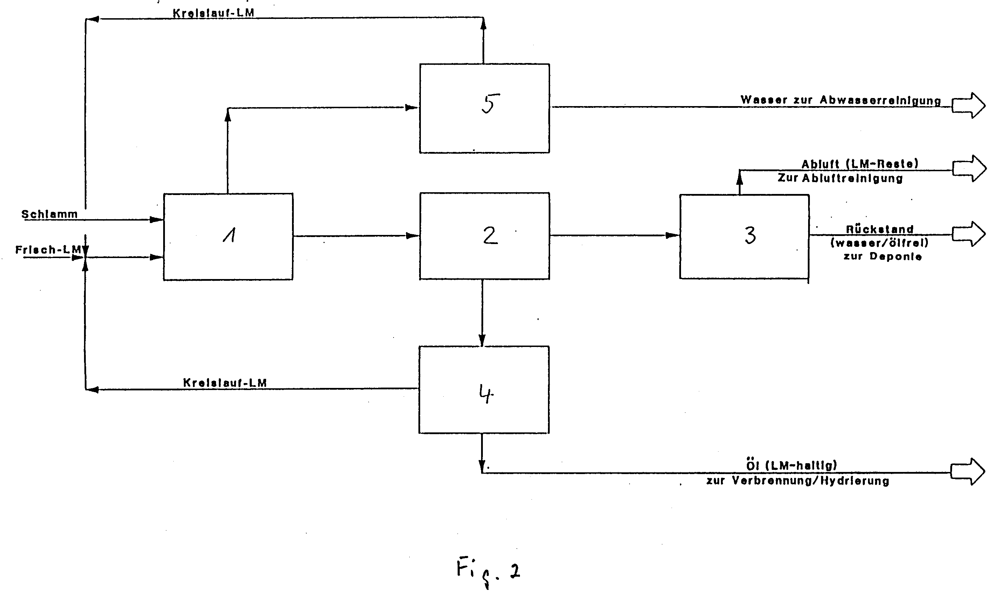

Die besonders bevorzugte Verfahrensvariante nach Fig. 2 besteht im wesentlichen aus folgenden Schritten:
(1) Wasserabtrennung durch azeotrope Destillation mit vorzugsweise aromatischen Lösungsmitteln im Siedebereich zwischen 80 und 160° C,

| | | |
|---|---|---|
| z.B. | Toluol | 110 °C |
| | Xylol | 92 °C |
| | Syncrude-Fraktion | 80 - 160 °C |

Die Siedepunkte der azeotropen Gemische liegen bei

| | | |
|---|---|---|
| z.B. | Toluol/H₂O | 84°C |
| | Xylol/H₂O | 92°C |

(2) Filtration. Durch die Wasserentfernung entsteht eine leicht filtrierbare Suspension des Feststoffs in organischer Phase. Ein Nachwaschen des Filterrückstandes mit dem reinen Lösungsmittel oder mit einem leichter siedenden KW/KW-Gemisch erleichtert die anschließende
(3) Rückstandsbehandlung mit Wärme im Vakuum zur restlosen Entfernung anhaftender Lösungsmittelreste. Der verbleibende Rückstand ist ohne weitere Zugabe von Zuschlagstoffen deponierfähig.
(4) Destillation. Das Filtrat von 2 enthält das Lösungsmittel-/Ölgemisch, aus dem das Lösungsmittel verlustfrei wiedergewonnen werden kann.
(5) Wasserabscheidung. Die Lösungsmittel-Phase ergibt zusammen mit dem aus der Destillation wiedergewonnenen Lösungsmittel den Hauptanteil. Verluste beim Destillieren 4 und bei der Lösungsmittel/Wasser-Trennung 5 werden durch Zugabe von Frisch-Lösungsmittel gedeckt.

Die Erfindung wird durch nachstehende Beispiele näher erläutert.

### Beispiel 1 bis 5

Die im Labormaßstab durchgeführte Behandlung eines Dekanterschlamms der folgenden ungefähren Zusammensetzung

| | |
|---|---|
| Wasser | 25,5 Gew.-% |
| Öl | 15,2 Gew.-% |
| Feststoff | 59,3 Gew.-% |

nach den mit Bezug auf Fig. 1 und 2 beschriebenen Verfahrensvarianten ergab die folgenden Restölgehalte im festen Rückstand:

| **Lösungsmittel** | | **Verfahren** | **Restölgehalt** |
|---|---|---|---|
| Petrolether | 40- 70°C | 1 | 1,5 |
| Ligroin | 100-140°C | 1 | 1,1 |
| Toluol | | 1 | 1,1 |
| Xylol | | 2* | 0 |
| Syncrude-Fraktion | 80-160°C | 2* | 0 |

| | | | |
|---|---|---|---|
| * Variante mit azeotroper Destillation gemäß Fig. 2. | | | |

## Patentansprüche

1. Verfahren zur Behandlung von wasserhaltigen, mit organischen Schadstoffen kontaminierten Materialien unter Verwendung leicht flüchtiger, mit Wasser nicht mischbarer organischer Lösungsmittel, gekennzeichnet durch die folgenden Schritte:
(a) Zugabe des organischen Lösungsmittels zu dem zu behandelnden Material und gründliches Mischen,
(c) Abtrennen der flüssigen organischen Phase mit den Schadstoffen,
(d) Abtreiben des verbliebenen Lösungsmittels aus dem Rückstand von Schritt (c) und
(e) Rückgewinnen des im Schritt (c) und (d) erhaltenen Lösungsmittels.

2. Verfahren nach Anspruch 1, dadurch gekennzeichnet, daß als organisches Lösungsmittel ein solches verwandt wird, das mit Wasser ein Azeotrop bildet, in einem Schritt (b) im Material vorhandenes Wasser azeotrop abdestilliert und das dabei angefallene Lösungsmittel abgetrennt und rückgeführt wird.

3. Verfahren nach Anspruch 1, dadurch gekennzeichnet, daß in einem Schritt (f) im festen Rückstand enthaltenes Restwasser durch Zugabe eines wasserbindenden Zuschlagstoffes gebunden wird.

4. Verfahren nach Anspruch 3, dadurch gekennzeichnet, daß als wasserbindender Zuschlagstoff Zement, Kalkhydrat oder Anhydrit verwandt wird.

5. Verfahren nach einem der Ansprüche 1 bis 4, dadurch gekennzeichnet, daß das verbliebene Lösungsmittel im Schritt (d) in der Wärme und/oder unter Anlegen eines Vakuums abgetrieben wird.

6. Verfahren nach einem der Ansprüche 1 bis 5, dadurch gekennzeichnet, daß als Lösungsmittel ein solches mit einem Siedepunkt von 60° C bis 200° C, vorzugsweise von 80° C bis 160° C verwandt wird.

7. Verfahren nach Anspruch 6, dadurch gekennzeichnet, daß als Lösungsmittel Toluol, Xylol oder eine Kohlenwasserstoffraktion verwandt wird.

8. Verfahren nach einem der Ansprüche 1 bis 7, dadurch gekennzeichnet, daß das Gewichtsverhältnis Feststoff : Lösungsmittel im Bereich von 1 : 1 bis 1 : 5, vorzugsweise 1 : 2 bis 1 : 3 beträgt.

9. Verfahren nach einem der Ansprüche 1 bis 8, dadurch gekennzeichnet, daß die Schritte (a) und (c) wenigstens einmal wiederholt werden.

10. Verfahren nach einem der Ansprüche 1 bis 9, dadurch gekennzeichnet, daß Schritt (a) bei erhöhter Temperatur durchgeführt wird.

11. Verfahren nach einem der Ansprüche 1 bis 10, dadurch gekennzeichnet, daß als kontaminiertes Material Ölabscheiderschlämme eingesetzt werden.

12. Verfahren nach einem der Ansprüche 1 bis 11, dadurch gekennzeichnet, daß das eingesetzte Material PCB- und/oder PCDM-haltig ist.

13. Verfahren nach einem der Ansprüche 1 bis 12, dadurch gekennzeichnet, daß das zu behandelnde Material mit Öl kontaminierter Boden ist.

14. Verfahren nach einem der Ansprüche 1 bis 13, dadurch gekennzeichnet, daß der im Schritt (d) erhaltene feste Rückstand, gegebenenfalls nach Trocknung oder chemischer Bindung des darin noch enthaltenen Wassers, zur Deponierung verfestigt wird.
